# EUROPÄISCHE PATENTSCHRIFT

(11) **EP 1 850 501 B1**
(45) Veröffentlichungstag und Bekanntmachung des Hinweises auf die Patenterteilung: **07.06.2017**
(21) Anmeldenummer: 07008403.3
(22) Anmeldetag: 25.04.2007
(51) Int. Cl.: H04B 3/56

(54) **Adaptive, kapazitive Koppelschaltung und Verfahren zur Nachrichtenübertragung über geschirmte Energiekabel eines elektrischen Energieverteilnetzes**
Adaptive, capacitative coupled switching and method for transmitting information over shielded power cables of an electrical power distribution network
Couplage adaptatif et capacitif et procédé de transmission d'informations par un câble d'alimentation blindé d'un réseau de distribution d'énergie électrique

(30) Priorität: 26.04.2006 DE 102006020029
(43) Veröffentlichungstag der Anmeldung: 31.10.2007
(73) Patentinhaber: iAd Gesellschaft für Informatik, Automatisierung und Datenverarbeitung mbH, 90613 Grosshabersdorf (DE)
(72) Erfinder: Bumiller, Gerd, Dipl.-Ing., 90768 Vach/Fürth (DE); Berold, Ulrich, Dipl.-Ing., 90427 Nürnberg (DE)
(74) Vertreter: Dreykorn-Lindner, Werner

(56) Entgegenhaltungen:
- WO-A-2006/017743
- DE-A1- 19 940 544
- US-A- 2 336 258
- US-A- 4 973 940
- US-A1- 2005 085 211

## Beschreibung

Die Erfindung betrifft gemäß Patentanspruch 1 eine adaptive, kapazitive Koppelschaltung und gemäß Patentanspruch 6 ein Verfahren zur Nachrichtenübertragung in elektrischen Energieverteilnetzen.

Die Schaffung neuartiger schneller Festnetzzugänge für die Telekommunikation im Ortsnetzbereich - auch Local Loop oder Last Mile genannt - ist seit geraumer Zeit Gegenstand intensiver Entwicklungsarbeiten. Nach der Aufhebung der Fernmeldemonopole, hat auf breiter Front ein intensiver Wettbewerb eingesetzt, der jedoch im Ortsnetzbereich bislang kaum zur Wirkung kam. Der Hauptgrund hierfür ist, dass die ehemaligen Monopolisten hier nach wie vor die Eigentümer der Leitungsnetze sind. Alternativen in Form von Mikrowellen-Funknetzen oder Kabel-TV-Netzen sind zurzeit in Entwicklung. Sie können jedoch aufgrund hoher Kosten in absehbarer Zeit keine flächendeckenden Alternativen zu bestehenden TK-Netzen bieten. Elektrische Energieverteilnetze hingegen haben - wie zahlreiche Studien und Feldversuche ergaben - durchaus dieses Potential. Sie sind flächendeckend und weitaus feiner verzweigt als jedes bestehende TK-Netz, denn sie erreichen nicht nur jedes Haus, sondern unmittelbar jeden Verbraucher elektrischer Energie und jede Steckdose.

Aufgrund dieser hervorragenden Perspektiven hat sich unter dem Begriff "PowerLine Communications (PLC)" ein neuer Industriezweig gebildet, der die technische Umsetzung der neuen Möglichkeiten und die Bereitstellung der damit verbundenen Dienstleistungen zum Ziel hat. PowerLine Communication - Systeme sind Nachrichtenübertragungssysteme, die Information über das Medium Energiekabel verteilen. Insbesondere ist hierbei die Übertragungsstrecke zwischen Trafostation im Niederspannungsnetz und Kundenanlage im Haus von Bedeutung. Die Topologie dieses Netzabschnittes besitzt meist eine Punkt-zu-Multipunkt-Struktur mit der Trafostation als Knotenpunkt. An diesem Knotenpunkt kann beispielsweise eine Sende-Empfangseinheit angeordnet werden, die hochfrequente Signale bis 30 MHz separat in die abgehenden Kabel einspeist und dem 50Hz Energiestrom überlagert. Weitere Sende-Empfangseinheiten können sich bei der Kundenanlage an der Schnittstelle zwischen Niederspannungsverteilnetz der Energieversorger und Hausinstallationsnetz der Kundenanlage befinden. Hier werden ebenfalls hochfrequente Signale in das Energiekabel eingespeist und empfangen. Die Überlagerung des 50Hz-Energiestromes mit hochfrequenten Datensignalströmen bringt grundsätzlich Probleme der elektromagnetischen Verträglichkeit mit sich. Um auf einfache Art und Weise die Durchführung universeller Messungen und/oder Datenübertragung bei Niederspannungsnetzen (PowerLine Cominunications PLC; PowerLine Communication - Systeme sind Nachrichtenübertragungssysteme, die Information über das Medium Energiekabel verteilen) unter Berücksichtigung deren nachrichtentechnischer Eigenschaften zu ermöglichen, ist aus der DE 100 50 476 B4 der Anmelderin eine Vorrichtung bekannt, bei der für den niedrigen Frequenzbereich bis einigen KHz mindestens ein mit allen drei Phasenleitern und dem Nulleiter und/oder für den höheren Frequenzbereich ein mit im 4-Segment-Kabel gegenüberliegenden Phasenleitern verbundenes und auf der Netzseite angeordnetes Ankoppelmodul, ein Entkoppelfilter mit mindestens zwei Paaren von in den Längspfad der Leiter integrierten Spulen sowie mindestens drei zwischen die Leiter geschalteten Impedanzen, ein sowohl auf der Netzseite als auch auf der Verbraucherseite angeordnetes Konditionierungsnetzwerk, bestehend aus mindestens einer zwischen zwei Leitern geschalteten Impedanz, und ein Messmodul mit mindestens einem Shunt oder Übertrager, welcher mit mindestens einem Leiter verbunden ist, vorgesehen sind. Das Gesamtmodul weist weiterhin ein mit dem Messmodul und mit mindestens einem Ankoppelmodul verbundenes DSP- und MCU-Modul und eine mit dem DSP- und MCU-Modul in Verbindung stehende Anzeigeeinrichtung sowie ein Stromversorgungsmodul auf. Das DSP-Modul bearbeitet Übertragungs-, Mess- und Überwachungsaufgaben im Timesharing-verfahren gemäß ihrer jeweiligen Priorität und das MCU-Modul nimmt die Steuerung des DSP-Moduls und die Datenverwaltung der vom DSP-Modul gelieferten Daten vor. Weiterhin kann ein Erweiterungsmodul vorgesehen werden, welches mit zwei sowohl auf der Netzseite als auch auf der Verbraucherseite angeordneten Ankoppelmoduln und dem DSP- und MCU-Modul verbunden ist. Mit dem Erweiterungsmodul entsteht ein Kommunikations-Gateway zwischen Außer- und Innerhäusbereich, wobei das Gesamtsystem nicht zwei Ankoppelmodule enthalten muss. Will man beispielsweise nur einen Stromzähler realisieren, welcher die Daten zur Trafostation überträgt, so entfällt das zweite Ankoppelmodul (einschließlich Konditionierungsnetzwerk und Erweiterungsmodul). Für entsprechende Anwendungen ist die Netzkonditionierung optional, d.h. das Konditionierungsnetzwerk bzw. die Koriditionierungsimpedanzen können dann entfallen. Die aus der DE 100 50 476 B4 der Anmelderin bekannte Vorrichtung vereint die Funktionen zur Kommunikation, Netzkontrolle, Netzanalyse, Messfunktion (z.B. auch zur Messung von Fehlerstrom oder Fehlerspannung) und Blindleistungssteuerung sowie Schutzfunktion (z.B. Motorschutz) in sich. Das Gesamtmodul ist damit kosteneffizient, da es Kommunikation und Netzkontrolle in einem System vereint, ermöglicht eine geringe Bauteilgröße und damit eine einfache Montage und die Integrierbarkeit am Zähler des Hausanschlusses sowie an der Trafostation, berücksichtigt die Netzsymmetrie und bietet die Möglichkeit zur Erweiterung. Schließlich kann über eine PC-Schnittstelle eine Fernabfrage bzw. - kontrolle der Messdaten und Datenübertragung mit dem DSP-Modul als Transceiver erfolgen.

Ein Verfahren zum Verteilen von Energie in einem Stromversorgungsnetz, bei dem Verbraucher vor dem Zuschalten einer Last den Stromanbieter anfragen können, ob sie die Last mit Niedertarif betreiben können, ist aus der DE 198 55 070 A1 bekannt. Abhängig von der momentanen Netzkapazität und der vom Verbraucher angegebenen Leistung, teilt der Anbieter dem Verbraucher mit, ob er die Last zum Niedertarif betreiben kann oder nicht. Hierzu ist ein bidirektionales Kommunikationsnetzwerk vorgesehen, das eine Steuerung des Anbieters mit dem beim Verbraucher angeordneten Stromzähler und der Laststeuerung verbindet. Das Kommunikationsnetzwerk kann als PLC-Netz (Power Line Carrier Netz) ausgestaltet sein, das die Netzleitungen als Übertragungsmedium verwendet.

Eine kombinierte Breitband-Funk-/PLC-Übertragung, insbesondere für die Audio-/Videodatenübertragung, von eine Zentrale (server bzw. media server (Multimediagerät)) zu PCs, Set-Top box, PVRs (personal video recorder), Fernseh- oder Audiogeräte u.a. ist in der US 2005/0047379 A1 beschrieben.

Weiterhin sind Stufenkoppelschaltungen seit langem bekannt; beispielsweise im Tuner eines Fernsehempfängers zur Selektion von Signalen, die von einer HF-Verstärkerstufe zu einer Mischstufe übertragen werden. Die Koppelschaltungen enthalten abstimmbare Elemente, welche entsprechend dem gewählten Fernsehkanal eingestellt werden, um die empfangenen HF-Signale im richtigen Frequenzbereich zum Mischer zu übertragen, so dass die selektierten Fernsehsignale so verarbeitet werden können, dass sie schließlich ein Bild- und Tonprogramm für einen Zuschauer ergeben. Allgemein müssen Fernsehempfänger ein bestimmtes HF-Signal für einen speziellen Kanal aus verschiedenen unterschiedlichen Frequenzbereichen oder Frequenzbändern aus den Fernsehsendersignalen selektieren können. Beispielsweise muss in den Vereinigten Staaten ein Fernsehtuner Kanäle selektieren können, deren HF-Bildträgerfrequenzen im unteren VHF-Band, im oberen VHF-Band oder im UHF-Band liegen können. Eine durchgehende Abstimmung einer Stufenkoppelschaltung vom unteren VHF-Bereich bis zum UHF-Bereich ist im Allgemeinen wegen des großen abzudeckenden Frequenzbereiches nicht möglich. Eine bandumschaltbare Stufenkoppelschaltung mit kapazitiver Kopplung ist aus der DE 36 06 437 A1 bekannt. Die Koppelschaltung enthält eine Reihenschaltung aus einer geraden Anzahl reaktiver Elemente zwischen Eingang und Ausgang der Koppelschaltung, wobei ein Zwischenpunkt dieser Reihenschaltung von Induktivitäten über ein erstes reaktives Überbrückungselement an ein Signalbezugspotential gekoppelt ist. Eine Reihenschaltung von einander entgegengesetzt gepolten Schaltdioden liegt parallel zu einem Teil der Reihenschaltung von Reaktanzelementen, wobei ein Zwischenprodukt der Diodenreihenschaltung über ein zweites Überbrückungsreaktanzelement an das Signalbezugspotential gelegt ist. In einer ersten Konfiguration sind die parallelgeschalteten Induktivitäten aus der Schaltung praktisch eliminiert, derart, dass sie mittels der veränderbaren Kapazitätselemente in einem ersten gewählten Frequenzbereich abstimmbar ist, während bei wahlweisem Sperren der Schalteranordnung die Koppelschaltung eine zweite Konfiguration einnimmt, bei welcher sie in einem zweiten ausgewählten Frequenzbereich abstimmbar ist. Hierbei liegt ein drittes Reaktanzelement zwischen dem Ausgang der Schaltung und einem Punkt der Reaktanzelement-Reihenschaltung, welcher vom Eingang der Schaltung entfernt ist; insbesondere ist ein Kondensator mit einem Ende an den Verbindungspunkt der Schalteranordnung mit der Induktivitätsreihenschaltung und mit einem anderen Ende an den Eingangs- oder Ausgangsanschluss angekoppelt. Dadurch wird eine Durchlasskurven-Formungsschaltung an die Koppelschaltung angeschaltet, welche in beiden Frequenzbändern wirkt und keinerlei für den Bandwechsel umgeschalteten Elemente benötigt.

In Weiterbildung hierzu ist aus der US-A-4 339 827 ein Antennentuner für VHF-TV-Antenne entsprechend dem ausgewählten TV-Sender und Einkopplung dieser Signale auf das Tuning-System des TV-Empfängers bekannt. Hierbei kommt eine variable Kapazität (Kapazitätsdiode) zum Einsatz. Außerdem werden weitere Reaktanzen (Induktivitäten, Kapazitäten) und Impedanzen mittels Schaltern in den Resonanzkreis gekoppelt, ggf. nur zu ausgewählten Zeitpunkten.

Weiterhin ist aus der US-A-3 794 941 ein Antennentuner zur effizienten Übertragung der Leistung eines Leistungsverstärkers eines Funksenders auf seine Antenne, wobei mehrere Antennen zur Auswahl stehen, durch automatische Impedanzanpassung bekannt. Die Antennenimpedanz wird dabei auf den für die Ausgangsstufe des Sende-Leistungsverstärkers notwendigen Lastwiderstand transformiert. Dies geschieht für einen Tuning-Zyklus abhängig vom jeweiligen Sendefrequenzbereich, indem (Serien)-Induktivitäten und (Parallel)-Kapazitäten, die binäre Werte besitzen, in einer L-Konfiguration selektiv hinzugeschalten werden. Das Tuning erfolgt durch quasiunabhängige Kontrollschleifen mit breitbandigen Phasen- und Impedanzsensoren derart, dass die gewünschte Lastimpedanz und Phase 0° approximiert wird. Die Informationen des Phasensensors dienen zum Schalten der Kapazitäten, die des Impedanzsensors zum Schalten der Induktivitäten. Kreuzkoppler weisen den Nachteil auf, dass diese erst bei höheren Frequenzen arbeiten. Falls Kreuzkopplern benutzt werden sollen (welche erst bei höheren Frequenzen arbeiten, wie bei der US-A- 3 794 941), muß jedoch stets Betrag und Phase gemessen werden.

Für Plasmaanwendungen, bei denen sehr große Impedanzunterschiede auftreten, ist aus der EP 0 408 841 B1 eine Schaltungsanordnung zum automatischen Abstimmen eines Anpassungsnetzwerks bekannt. Um die Eingangsimpedanz einer Anpassungsschaltung für eine sich verändernde Lastimpedanz ohne technisch kritische Strommessungen zu messen und zu Regelungszwecken zu verwenden, steht ein Hochfrequenzgenerator über ein Anpassungsnetzwerk mit einer variablen Lastimpedanz in Verbindung, wobei die Last eine Plasmastrecke ist. Das Anpassungsnetzwerk weist drei Kondensatoren im Längszweig und zwei Parallelschwingkreise im Querzweig auf. Diese Schwingkreise bestehen aus jeweils einem variablen Kondensator und einer festen Spule, wobei der Schwingkreis mit seinem einen Anschluss an Masse und mit seinem anderen Anschluss zwischen den Kondensatoren liegt, während der andere Schwingkreis mit seinem einen Anschluss ebenfalls an Masse liegt, aber mit seinem anderen Anschluss mit den Kondensatoren in Verbindung steht. An der Anpassungsschaltung werden zwei verschiedene Größen abgegriffen und einer Regeleinheit zugeführt. Es handelt sich bei diesen Größen um die Spannung U_{E}, die am Ausgang des Hochfrequenzgenerators 1 ansteht, sowie um die Spannung U₁, die am Parallelschwingkreis 7, anliegt. Diese Spannungen U_{E} und U₁ werden über kapazitive Spannungsteiler, die jeweils zwei Kondensatoren enthalten, der Regeleinheit zugeführt, welche die beiden Regelgrößen x₁ und x₂ abgibt. Diese Regelgrößen x₁ und x₂ werden in Verstärkern verstärkt und auf Stellmotore gegeben, welche eine Verstellung der Kondensatoren vornehmen. Die Kondensatoren werden mittels dieser Regel- und Recheneinheit dabei so verstellt, dass das Anpassungsnetzwerk stets einen Widerstandswert Z_{Esoll} einnimmt, der dem Innenwiderstand des Hochfrequenzgenerators entspricht. Im Anpassungsfall muss Z_{E} reell sein und 50 Ohm betragen. Daraus ergibt sich die Anpassungsbedingung für Z_{Isoll}, also den Widerstandswert, der bei U₁, auftreten soll, zu 50 Ohm minus der Impedanz des Festkondensators. Da diese komplex ist, liefern die Beträge der beiden Impedanzen eine Aussage über Real- und Imaginärteil des Reflexionsfaktors bzw. der Eingangsimpedanz. Es werden also nur zwei Spannungen gemessen und es wird ein dem Strom proportionales Signal aus der Spannungsdifferenz gebildet, wodurch keine direkte Strommessung erforderlich ist. Weiterhin werden die Regelgrößen aus den Beträgen der drei Signale gebildet, so dass Phasenmessungen entfallen. Dadurch wird ein preiswerter und zuverlässiger Aufbau der Messaufnehmer und der Auswerteschaltung möglich. Außerdem erfolgt die Regelung weitgehend amplitudenabhängig.

Weiterhin ist aus der DE 198 17 575 A1 ein kapazitives Koppelkabel zur Signaleinkopplung in Freiluftleitungen oder Stromkabel auf Hoch- und Mittelspannungsstromleitungen bekannt. Dabei wird zur Einkopplung von Signalen einer Kommunikationselektronik in eine Phase einer Stromleitung ein spannungsfestes Koppelkabel, welches einen Phasenleiter und eine Abschirmung aufweist, vorgesehen und dessen Phasenleiter mit der Phase der Stroinleitung und dessen Abschirmung mit einem Signalkoppler der Kommunikationselektronik in elektrischer Verbindung steht. Demgemäß können voluminöse, hochspannungsisolierte Koppelkondensatoren durch geringfügig modifizierte Stromkabel ersetzt werden und mit den Koppelkabeln sind eine Signaleinkopplung in ungeschirmte Überlandleitungen und eine nachrichtentechnische Überbrückung von Lasttrennern auf einfache Weise realisierbar. Die Wirkungsweise des Koppelkabels als Koppelkondensator beruht darauf, dass zwischen der mindestens einen Abschirmung und dem mindestens einen Phasenleiter eine Kapazität besteht, über die Signale kapazitiv in mindestens eine Phase der Überlandleitung eingekoppelt werden können. Die Größe der Koppelkapazität hängt von der relativen geometrischen Anordnung der Abschirmung(en) zu dem oder den Phasenleiter(n), in welche die Signale eingespeist werden, sowie von der Länge der Koppelstrecke bzw. des Koppelkabels ab. Die Signale können auch zwischen verschiedenen Phasenleitern des Koppelkabels oder zwischen verschiedenen Phasen der Überlandleitung überkoppeln.

Schließlich sind aus der DE 199 07 095 C5 eine Schaltung zur kapazitiven Ankopplung einer Datenübertragungseinrichtung an ein Energieübertragungsnetz und eine Koppeleinheit mit Ankoppelschaltung für eine Datenübertragungseinrichtung an ein elektrisches Energieübertragungsnetz bekannt, welche mechanisch und elektrisch an eine Phase des elektrischen Energieübertragungsnetzes anschließbar ist. Die Koppeleinheit weist isolierenden Werkstoff auf, der die Ankoppelschaltung gehäuseartig, insbesondere in einer mit einem Stützisolator vergleichbaren Form, so umschließt, dass ein erster Anschluss einer Reihenschaltung an die Phase des elektrischen Energieübertragungsnetzes, ein zweiter Anschluss der Reihenschaltung an das Bezugspotential und ein dritter Anschluss der Ableitspule an eine Datenübertragungseinrichtung von außen zugänglich sind. Um die Ankoppelschaltung und eine diese enthaltende Koppeleinheit derart auszugestalten, dass diese sich bei Auftritt eines internen Fehlers selbst vom Netz möglichst so abkoppelt und dessen Betrieb nicht beeinträchtigt wird, ist eine Feinsicherung in der Reihenschaltung an der Phase angeordnet. Die Feinsicherung weist solche elektrische Kennwerte auf, dass diese weder von einem Strom der Datenübertragungseinrichtung noch von Überspannungen des elektrischen Energieübertragungsnetzes ausgelöst wird. Die elektrischen Kennwerte der Feinsicherung und die Stromtragefähigkeit des ersten Überspannungsableiters sind so abgestimmt, dass die Feinsicherung im Falle einer Durchlegierung des Koppelkondensators bereits von einem anklingenden Kurzschlussstrom durch den Überspannungsableiter schnell und sicher ausgelöst wird, wobei der Wert der Stromtragefähigkeit des ersten Überspannungsableiters kleiner ist als der Wert des Kurzschlussnennstromes des elektrischen Energieübertragungsnetzes. Als elektrische Kennwerte hierfür sind insbesondere die Stromtragefähigkeit des ersten Überspannungsableiters und der Nennstromwert bzw. der Wert des Auslösestromes der Feinsicherung geeignet. Die Ankoppelschaltung kann eine zusätzliche Schutzschaltung aufweisen, welche aus Gründen der Redundanz und des Feinschutzes zumindest einen zweiten Überspannungsableiter parallel zur Ableitspule enthält. Vorteilhaft sind der erste und zweite Überspannungsableiter weitgehend baugleich ausgeführt. Ferner enthält die Schutzschaltung in einer jeden Zuleitung zu den Anschlusspunkten der Datenübertragungseinrichtung zusätzlich jeweils einen Filterkondensator. Hiermit können energietechnische Frequenzen aus der einen Phase, welche in der Größenordnung von 50 bis 60 Hertz und Vielfachen davon liegen, von der Datenübertragungseinrichtung ferngehalten werden. In Doppelfunktion der Ankoppelschaltung werden einerseits die Datenübertragungseinrichtung und Personen gegen Überspannungen aus dem Energieübertragungsnetz geschützt, andererseits wird das Energieübertragungsnetz gegen Fehlfunktionen der Ankoppelschaltung geschützt, d. h. insbesondere einer Durchlegierung des Koppelkondensators.

Weiterhin ist beispielsweise aus Proceedings of International Symposium on Powerline Communication and its Application 2000, Aufsatz "Complete Power-Line Narrow Band System for Urban-Wide Communication" von Gerd Bumiller und Markus Sebeck, Seiten 285 bis 290 die Datenübertragung auf Energieleitungen, sowohl auf Nieder- wie Mittelspannung, mit Hilfe einer kapazitiven Einkopplung bekannt. Die erreichten Reichweiten gehen über etliche Trafostationen und teilweise über mehr als 10 km. Nachteil dieser Einkopplung ist die direkte Verbindung mit dem Leiter, der daraus notwendigen Spannungsfestigkeit, der Platzbedarf zur Installation und die Notwendigkeit bei der Installation die Anlage spannungsfrei zu schalten. Bei sehr kompakten Trafostationen, die mit Erdkabel versorgt werden, meistens neue, ist die Installation einer kapazitiven Einkopplung teilweise nicht möglich.

Weiterhin ist aus der US-A- 2,336,258 eine Einkoppeleinrichtung für Trägerfrequenzsignale eines Trägerfrequenzsenders auf ungeschirmte, an Masten montierte Mittelspannungs-/Hochspannungsleitungen bekannt. Der Trägerfrequenzsender/-empfänger ist dabei über mindestens eine auf einen festen Wert einstellbare Induktivität, ein Signalkabel (vorzugsweise ein Koaxialkabel von einigen zehn bis mehr als tausend Meter Länge), einen Koppelkondensator und einem Transformator an die Mittelspannungs-/Hochspannungsleitung angeschlossen. Alternativ ist das Signalkabel über den Koppelkondensator direkt an Mittelspannungs-/Hochspannungsleitung angeschlossen. Für zwei verschiedene Frequenzen, beispielsweise eine Sendefrequenz und eine Empfangsfrequenz, sind verschiedene Ein-/Auskoppelpfade mit einer Reihenschaltung von Kapazität und einer auf einen bestimmten,Wert einstellbarer Induktivität vorgesehen, wobei stets die Minimierung des schädlichen Einflusses des Signalkabels vorgesehen ist.

Schließlich ist aus der DE 199 40 544 A1 eine Einrichtung zur Einkopplung eines hochfrequenten Sendesignals in ein Niederspannungsnetz bekannt, wobei ein Ausgangsverstärker angeordnet ist, dem als Eingangsspannung eine an einer Additionsstelle gebildete Differenzspannung zwischen dem Sendesignal und einem Rückführsignal zugeführt ist. Zur Anpassung an die Netzimpedanz ist dem Ausgangsverstärker ein Netzwerk nachgeschaltet. Im Einzelnen sind am Ausgang des Netzwerks Mittel zur Erfassung einer dem Netzwcrk-Ausgangsstrom proportionalen Spannung angeordnet und die erfasste Spannung ist einem Reglermodul zugeführt, dessen Ausgangssignal das Rückführsignal ist. Das Netzwerk ist mit passiven Bauelementen aufgebaut und das Reglermodul enthält Mittel zur Ausführung einer Verstärkung, einer Hochpassfilterung und einer Integrationsfunktion. Dabei ist dem Netzwerk ein Einkoppelmodul nachgeschaltet, das einen Transformator mit primär- und sekundärseitigen Koppelkondensatoren enthält. Alternativ ist dem Netzwerk ein Einkoppelmodul nachgeschaltet, ist, das nur einen Koppelkondensator enthält. Dadurch wird die Zuverlässigkeit des gesamten Power-Line-Datenübertragungssystems gesteigert, bei gleichzeitiger Verringerung der Verlustleistung des Sendeverstärkers und der nötigen Netzteilleistung. Es erfolgt keine automatische Anpassung auf verschiedene, im Betrieb wählbare Frequenzbereiche und durch die verwendete lineare Rückkopplung wird im wesentlichen eine Frequenzgangkorrektur erreicht. Eine Einstellung auf verschiedene Frequenzbereiche ist aufgrund der nicht veränderlichen Bauteile nicht möglich.

Wie die vorstehende Würdigung des Standes der Technik aufzeigt, ist die Einspeisung von Signalen auf Stromversorgungsleitungen (Powerline-Übertragung) bei kapazitiver Ankopplung im Mittel(MV)- und Hochspannungs(HV)-Bereich bekannt. Häufig wird jedoch die Einspeisung von Signalen bei verschiedenen Frequenzen gewünscht (z.B. in verschiedenen Bändern des Cenelec Bandes (A-D, 9-150kHz) oder darüber (<500kHz). Das Problem, welches hierbei auftritt ist, dass große Kapazitäten bei hohen Spannungen schwierig zu realisieren sind, andererseits Einkoppel-Cs sehr niedrig sind.'Bei PowerLine Communication - Systemen in niedrigen Frequenzbereichen ergeben sich hohe Einkoppelimpedanzen im Vergleich zur Netzimpedanz (Größenordnung: 100 Ω) (z.B. Größenordnung der Einkoppelimpedanzen bei Frequenzen < 100 kHz: 1 kΩ bis zu etlichen kΩ), wodurch dominante Verluste beim Senden bereits in der Ankoppeleinheit entstehen. Demgemäß fehlt in der Praxis eine kapazitive Koppelschaltung, welche ohne zusätzliche Hardware-Funktionsmodule/ohne aufwendige Schnittstellenanpassungen schnell und wirtschaftlich, insbesondere auch im Betrieb, installiert werden kann. Besonders bedeutsam ist dies, weil die Mittel- oder Hochspannungsanlagen herstellende Industrie als äußerst fortschrittliche, entwicklungsfreudige Industrie anzusehen ist, die sehr schnell Verbesserungen und Vereinfachungen aufgreift und in die Tat umsetzt.

Der Erfindung liegt die Aufgabe zugrunde, eine kapazitive Koppelschaltung und ein Verfahren derart, auszugestalten, dass einerseits eine kapazitive Ankopplung im Nieder (LV)-, Mittel(MV)- und Hochspannungs(HV)-Bereich, andererseits eine, automatische Anpassung an unterschiedliche Koppelkapazitäten ermöglicht wird.

Einkoppelmodul nachgeschaltet, ist, das nur einen Koppelkondensator enthält. Dadurch wird die Zuverlässigkeit des gesamten Power-Line-Datenübertragungssystems gesteigert, bei gleichzeitiger Verringerung der Verlustleistung des Sendeverstärkers und der nötigen Netzteilleistung. Es erfolgt keine automatische Anpassung auf verschiedene, im Betrieb wählbare Frequenzbereiche und durch die verwendete lineare Rückkopplung wird im wesentlichen eine Frequenzgangkorrektur erreicht. Eine Einstellung auf verschiedene Frequenzbereiche ist aufgrund der nicht veränderlichen Bauteile nicht möglich.

Weiterhin ist aus der WO 2006/017743 A2 ein Verfahren und ein System zur Einspeisung von Signalen auf Freileitungen im Mittelspannungsbereich zwischen 60 / 150 KV bekannt, welches eine induktive Kopplungseinrichtung (welche auf dem Prinzip beruht, dass mit Hilfe dieser Einkoppelung ein ringförmiges Magnetfeld erzeugt wird), einen Koppler, einen ersten und einen zweiten Sender, einen Mikroprozessor, welcher mit den beiden Sendern und einem Empfänger sowie einer Relaissteuerung verbunden ist, und eine mit der Relaissteuerung verbundene Kondensatorbank aus zueinander binär gestaffelten Kondensatoren aufweist. Der Koppler ist ein ca. zwei Meter langes Adapterstück mit einer wetterfesten Isolierung aus Kunststoff und einem Schirm, welcher nur einseitig geerdet ist. Durch die nur einseitige Erdung des Schirms des Adapterstücks trägt dieser auch nicht zur Signalübertragung bei, so dass das Signal direkt auf den Freileiter eingekoppelt wird. Die Abschirmung im Bereich der induktiven Einkopplung dient lediglich zur besseren Trennung der Hoch- von der Niederspannungsseite und die Anpassung mittels Mikroprozessor, Relaissteuerung und Kondensatorbank und Empfänger, welcher die über die induktive Kopplungseinrichtung übertragenen Signale vom zweiten Sender empfängt, zielt auf die Abstimmung eines in die Ankopplung integrierten Schwingkreises, entsprechend mit einem Frequenzdetektor und Temperatursensor gemessener veränderlicher Frequenzen und Temperaturen auf der Freileitung, ab.

Wie die vorstehende Würdigung des Standes der Technik aufzeigt, ist die Einspeisung von Signalen auf Stromversorgungsleitungen (Powerline-Übertragung) bei kapazitiver Ankopplung im Mittel(MV)- und Hochspannungs(HV)-Bereich bekannt. Häufig wird jedoch die Einspeisung von Signalen bei verschiedenen Frequenzen gewünscht (z.B. in verschiedenen Bändern des Cenelec Bandes (A-D, 9-150kHz) oder darüber (<500kHz). Das Problem, welches hierbei auftritt ist, dass große Kapazitäten bei hohen Spannungen schwierig zu realisieren sind, andererseits Einkoppel-Cs sehr niedrig sind. Bei PowerLine Communication - Systemen in niedrigen Frequenzbereichen ergeben sich hohe Einkoppelimpedanzen im Vergleich zur Netzimpedanz (Größenordnung: 100 Ω) (z.B. Größenordnung der Einkoppelimpedanzen bei Frequenzen < 100 kHz: 1 kΩ bis zu etlichen kΩ), wodurch dominante Verluste beim Senden bereits in der Ankoppeleinheit entstehen. Demgemäß fehlt in der Praxis eine kapazitive Koppelschaltung, welche ohne zusätzliche Hardware-Funktionsmodule/ohne aufwendige Schnittstellenanpassungen schnell und wirtschaftlich, insbesondere auch im Betrieb, installiert werden kann. Besonders bedeutsam ist dies, weil die Mittel- oder Hochspannungsanlagen herstellende Industrie als äußerst fortschrittliche, entwicklungsfreudige Industrie anzusehen ist, die sehr schnell Verbesserungen und Vereinfachungen aufgreift und in die Tat umsetzt.

Der Erfindung liegt die Aufgabe zugrunde, eine kapazitive Koppelschaltung und ein Verfahren derart auszugestalten, dass einerseits eine kapazitive Ankopplung im Nieder (LV)-, Mittel(MV)- und Hochspannungs(HV)-Bereich, andererseits eine automatische Anpassung an unterschiedliche Koppelkapazitäten ermöglicht wird.

Diese Aufgabe wird, gemäß Patentanspruch 1, durch eine adaptive, kapazitive Koppelschaltung zur Einspeisung von Signalen einer Spannungsquelle bei verschiedenen Frequenzen in Energiekabel mit mindestens einem Leiter eines elektrischen Energieverteilnetzes, mit einem Einkoppelfilter und einer mit einem Leiter in Verbindung stehenden, einstellbaren Induktivität zur Kompensation einer Kapazität des Leiters, dadurch gelöst, dass zur Einspeisung in ein geschirmtes Energiekabel mit mindestens einem Leiter und diesen umschließendem Mantel ein Mantelkoppelfilter als Einkoppelfilter, eine mit dem Mantelkoppelfilter in Verbindung stehende, einstellbare Induktivität zur Kompensation der Mantelkoppelkapazität zwischen Leiter und Mantel, eine mit der einstellbaren Induktivität verbundene Steuereinrichtung und ein mit der Steuereinrichtung verbundenes Messmodul zur Messung von Sendestrom oder Sendestrom und Sendespannung vorgesehen ist, , und dass die Steuereinrichtung sowohl die eigentliche Datenübertragung als auch die Impedanzanpassung steuert und die Einkoppelimpedanz in Sendepausen anpasst, und dass - falls der Sendestrom nach der Maximierung zu hoch ist - eine Verringerung der Sendeleistung durch Reduktion der Sendespannung erfolgt und dass - falls der Sendestrom nach Maximierung deutlich zu hoch ist - das Senden stoppt und eine Fehlermeldung wegen HF-Kurzschluss am Netz erfolgt, so dass eine Maximierung des Sendestroms der Spannungsquelle durch automatische Optimierung der aus Mantelkoppelkapazität und einstellbarer Induktivität gebildeten Einspeiseimpedanz der Koppelschaltung nach Maßgabe der Netzimpedanz des elektrischen Energieverteilnetzes zur Erzielung einer möglichst niedrigen Einspeiseimpedanz und Netzimpedanz im jeweiligen Frequenz- und Spannungsbereich erfolgt.

Die erfindungsgemäße adaptive, kapazitive Koppelschaltung ermöglicht vorzugsweise eine Installation im Betrieb einer 10 / 20 kV Energieleitung, da kein Eingriff im Sicherheitsbereich, der meist durch konstruktive Maßnahmen zusätzlich geschützt ist, erforderlich ist und die kapazitive Ein- / Auskopplung direkt über einen Leiter erfolgen kann. Das Erfindungsprinzip gilt allgemein für kapazitive Ankopplung, wobei vorzugsweise eine schaltbare Induktivität benutzt wird, und für beliebige Spannungsquellen, beispielsweise für eine Datenübertragungseinrichtung. Insbesondere ist im Vergleich zur aus der US-A-3 794 941 bekannten Lösung, bei der Betrag und Phase gemessen werden muss, bei der erfindungemäßen Lösung keine Phasenmessung notwendig. In vorteilhafter Weise wird die Minimierung der Ausgangsimpedanz der Einkoppeleinrichtung incl. Anpassschaltung (-> Einspeiseimpedanz), bezogen auf die Schnittstelle des Einkoppelpunktes auf der Stromleitung erreicht. Wie umfangreiche Untersuchungen ergeben haben, ist aufgrund der Zeitvarianz der Netzimpedanz und zur Vermeidung (genauer:
Reduzierung) nichtlinearer Verzerrungen diese Minimierung erforderlich. Um gleichzeitig die Anforderungen der CENELEC-Norm EN50065 bezüglich der Impedanz außerhalb des Nutzbandes zu erfüllen, wird erfindungsgemäß eine schmalbandige Anpassung/Optimierung vorgenommen, die wiederum zur Nutzung verschiedener Frequenzbereiche abstimmbar ist. Die erfindungsgemäße Ausgestaltung der Erfindung weist den Vorteil auf, dass auf einfache Art und Weise eine Impedanzmodulation des Sendesignals vermieden wird und - da die Steuereinrichtung/digitale Recheneinheit für die eigentliche Datenübertragung und die Impedanzanpassung zuständig ist, dies einfach steuern kann. Die erfindungsgemäße Ausgestaltung, dass - falls der Sendestrom nach der Maximierung zu hoch ist - eine Verringerung der Sendeleistung durch Reduktion der Sendespannung erfolgt und dass - falls der Sendestrom nach Maximierung deutlich zu hoch ist - das Senden stoppt und eine Fehlermeldung wegen HF-Kurzschluss am Netz erfolgt, weist den Vorteil auf, dass eine Selbstschutzfunktion der Koppelschaltung (Kurzschlussfestigkeit) erreicht wird.

Weiterhin wird diese Aufgabe, gemäß Patentanspruch 6, bei einem Verfahren zur adaptiven, kapazitiven Kopplung einer Spannungsquelle an ein geschirmtes Energiekabel mit mindestens einem Leiter und diesen umschließendem Mantel eines elektrischen Energieverteilnetzes mittels einer Koppelschaltung mit einem Mantelkoppelfilter als Einkoppelfilter, einer schaltbaren Induktivität, einem Messmodul zur Messung von Strom oder Strom und Spannung der Spannungsquelle und einer Steuereinrichtung,bei dem:
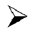 die Einspeisung von Signalen bei verschiedenen Frequenzen erfolgt,
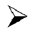 die Kapazität zwischen Leiter und Mantel genutzt wird,
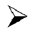 die Steuereinrichtung sowohl die eigentliche Datenübertragung als auch die Impedanzanpassung steuert und die Einkoppelimpedanz in Sendepausen anpasst und- falls der Sendestrom nach der Maximierung zu hoch ist - eine Verringerung der Sendeleistung durch Reduktion der Sendespannung erfolgt und - falls der Sendestrom nach Maximierung deutlich zu hoch ist - das Senden stoppt und eine Fehlermeldung wegen HF-Kurzschluss am Netz erfolgt, so dass
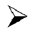 eine Maximierung des Sendestroms der Spannungsquelle durch automatische Optimierung durch Variation der Induktivität mittels der schaltbaren Induktivität, der aus Mantelkoppelkapazität und einstellbarer Induktivität gebildeten Einspeiseimpedanz der Koppelschaltung nach Maßgabe der Netzimpedanz des elektrischen Energieverteilnetzes zur Erzielung einer möglichst niedrigen Einspeiseimpedanz und Netzimpedanz im jeweiligen Frequenzbereich erfolgt,
gelöst.

Das erfindungsgemäße Verfahren weist den Vorteil auf, dass auf überraschend einfache Art und Weise die Einspeisung von Signalen der Spannungsquelle, insbesondere einer Datenübertragungseinrichtung, bei verschiedenen Frequenzen auf Stromversorgungsleitungen (Powerline-Übertragung) bei kapazitiver Ankopplung im Nieder (LV)- und/oder Mittel (MV)- und/oder Hochspannungs (HV)-Bereich erfolgen kann. Weiterhin ist von Vorteil, dass durch die Messung und Maximierung des Stroms der Spannungsquelle eine zusätzliche Optimierung der Sendeleistung erfolgen kann.

Das Prinzip eines Mantelkoppelfilters ist ansich aus der DE 198 17 575 A1 bekannt. Erfindungsgemäß werden hierbei Mantelkoppel-C verwendet.

Vorzugsweise besteht, gemäß Patentanspruch 3, die schaltbare Induktivität aus einer Serienschaltung von Induktivitäten.

Wegen der hohen Spannungen müssen Induktivitäten aus dem Bereich der Energieversorgung verwendet werden, wobei handelsüblich keine abstimmbaren Induktivitäten, sondern nur feste Induktivitäten mit Toleranz von 10% bis 20% verfügbar sind. Durch die Verwendung von mehreren schaltbaren Induktivitäten (Serienschaltung) zur Realisierung einer einstellbaren Induktivität kann dies kostengünstig erfolgen.

Bei einer bevorzugten Ausgestaltung der Erfindung ist, gemäß Patentanspruch 5, die schaltbare Induktivität vor oder nach einem Übertrager angeordnet.

Diese Ausgestaltung der Erfindung weist den Vorteil auf, dass eine kompakte Bauform ermöglicht wird und auch Anforderungen hinsichtlich hoher Personensicherheit erfüllt werden können. Ist die einstellbare/schaltbare Induktivität auf der Netzseite angeordnet, muss deren Spannungsfestigkeit, insbesondere die Impulsspannungsfestigkeit, höher sein. Weiterhin ergeben sich, wenn das Übertragungsverhältnis ü verschieden von 1 ist, bei unterschiedlicher Anbringung auch unterschiedliche Anforderungen an die einstellbare/schaltbare Induktivität bezüglich deren Induktivitätswert und Stromtragfähigkeit (abhängig dann jeweils von Werten auf einer Seite).

Weitere Vorteile und Einzelheiten lassen sich der nachfolgenden Beschreibung einer bevorzugter Ausführungsformen der Erfindung unter Bezugnahme auf die Zeichnung entnehmen. In der Zeichnung zeigt:
- **FIG. 1**: das Blockschaltbild einer ersten Ausführungsform,
- **FIG. 2**: das Blockschaltbild einer zweiten Ausführungsform und
- **FIG. 3**: eine dritte Ausführungsform der erfindungsgemäßen adaptiven, kapazitiven Koppelschaltung.

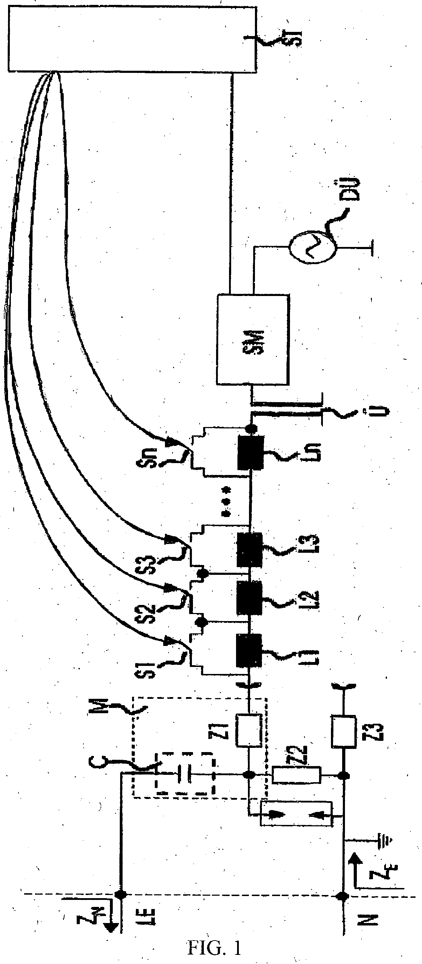

**FIG. 1** zeigt eine erste Ausführungsform einer adaptiven, kapazitiven Koppelschaltung zur Einspeisung von Signalen bei verschiedenen Frequenzen in geschirmte Energiekabel eines elektrischen Energieverteilnetzes. Bei PLC ergeben sich in niedrigen Frequenzbereichen hohe Einkoppelimpedanzen im Vergleich zur Netzimpedanz (Größenordnung: 100 Ω) (z.B. Größenordnung der Einkoppelimpedanzen bei Frequenzen < 100 kHz: 1 kΩ bis zu etlichen kΩ). Dadurch entstehen dominante Verluste beim Senden bereits in der Koppelschaltung. In **FIG.1** ist ein Strommessmodul SM allgemein dargestellt und es wird ein Einkoppelfilter genutzt; ebenso ist hier eine Datenübertragungseinrichtung DÜ allgemein als Spannungsquelle dargestellt. Die in **FIG. 1** dargestellten Impedanzen Z1 und/oder Z2 und/oder Z3 können ggf. auch wegfallen werden und im Bereich der Ankopplung können auch noch zusätzliche Sicherungselemente angebracht sein. Erfindungsgemäß erfolgt eine Maximierung des Sendestroms der Spannungsquelle DÜ durch automatische Optimierung der Einspeiseimpedanz Z_{E} der Koppelschaltung nach Maßgabe der Netzimpedanz Z_{N} des Energieverteilnetzes im jeweiligen Frequenzbereich.

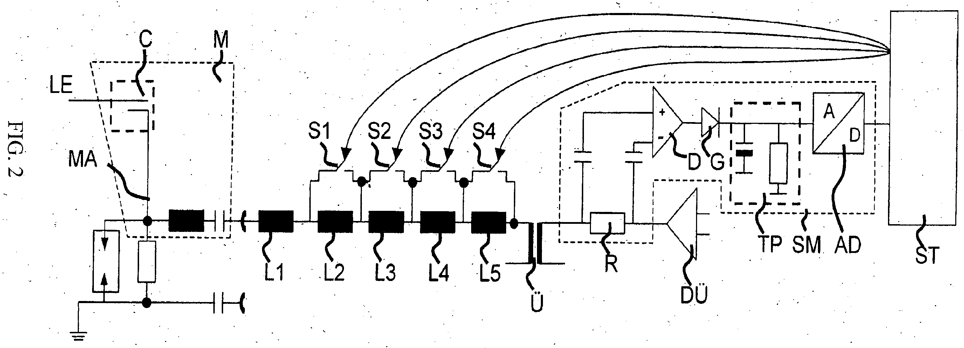

**FIG. 2** zeigt eine zweite Ausführungsform, bei der erfindungsgemäß ein Mantelkoppelfilter M als Einkoppelfilter genutzt wird, wodurch die Kapazität C zwischen Leiter LE und Mantel MA genutzt wird anstatt ein zusätzliches Bauteil anzubringen. Durch Verwendung des Mantelkoppelfilters ist die Koppelschaltung deutlich günstiger bei geringerem Platzbedarf. Zudem ist eine einfachere Installation, nämlich im Betrieb bzw. bei Abschaltung des jeweiligen Leiters anstatt der gesamten Trafostation möglich, da der Eingriff nur am Mantel, nicht am Leiter selbst nötig ist.

Mit dem Leiter LE steht zur Kompensation der Kapazität C erfindungsgemäß eine einstellbare Induktivität L1, ... , Ln in Verbindung, mit welcher eine Steuereinrichtung ST verbunden ist. Vorzugsweise wird, eine schaltbare Induktivität mit fünf Teilinduktivitäten benutzt, wobei durch die Kompensation der Kapazität C mittels schaltbarer Induktivität L1, ... , L5, im gewünschten Frequenzbereich ein Notch (=Einbruch über der Frequenzachse) in der Impedanz entsteht.

Hierzu ist vorzugsweise mit der Steuereinrichtung ST ein Strommessmodul SM, bestehend aus einem Differenzverstärker D zur Messung des Sendestroms einer Datenübertragungseinrichtung DÜ über einen Widerstand R, einen am Ausgang des Differenzverstärkers D angeschlossenen Gleichrichter G zur Hüllkurvenauswertung, einem diesem nachgeordneten Tiefpassfilter TP und nachfolgend einem Analog-/Digital-Wandler AD. Durch die Verwendung eines Tiefpassfilter kann der nachfolgende Analog-/Digital-Wandler mit niedriger Abtastrate betrieben werden, was auch Vorteile bei der weiteren Auswertung (Rechenaufwand) mit sich bringt. Die Steuereinrichtung ST ist vorzugsweise als Mikrocontroller oder als digitaler Signalprozessor ausgestaltet.

Der Abgleich erfolgt vorzugsweise durch Messung des Stroms der Spannungsquelle (Sendeverstärker) und Maximierung des Stroms durch Variation der Induktivität L1, ... , L5 mittels der Schalter S1, .. , S4 schaltbarer Induktivitäten. Beim Stand der Technik erfolgt in der Regel der Abgleich durch Stehwellenverhältnis. Dies ist im vorliegenden Anwendungsfall, d.h. zur Einspeisung von Signalen bei verschiedenen Frequenzen in geschirmte Energiekabel eines elektrischen Energieverteilnetzes, bei den niedrigen Frequenzen so nicht machbar, da Kreuzkoppler erst bei höheren Frequenzen arbeiten. Die schaltbare Induktivität L1, ... , L5 besteht vorzugsweise aus einer Serienschaltung von Induktivitäten L1, ... , L5, welche zueinander binär gestaffelt sind, so dass eine möglichst einfache und genaue Einstellung der Induktivität L1, ... , L5 ermöglicht wird.

Die Maximierung des Sendestroms erfolgt vorzugsweise durch Anpassung der Impedanz im jeweiligen Frequenzbereich, d.h. Variation der Induktivität L1, ... , L5 zur Erzielung einer möglichst niedrigen Einkoppelimpedanz (gebildet im Wesentlichen aus der Koppelkapazität C ("Mantelkoppelkapazität") und den schaltbaren Induktivitäten L1, ... , L5, wodurch eine automatische Anpassung an unterschiedliche Koppelkapazitäten möglich. Ist weiterhin der Sendestrom nach Maximierung zu hoch (z.B. wg. Netzelementen, die HF-Kurzschlüsse darstellen), so ist eine Verringerung der Sendeleistung durch Reduktion der Sendespannung möglich. Ist der Sendestrom deutlich zu hoch, so wird das Senden gestoppt und es erfolgt eine Fehlermeldung wegen HF-Kurzschluss am Netz, so dass eine Selbstschutzfunktion der Schaltung (Kurzschlussfestigkeit) ermöglicht wird. Soweit es eine Normung (CENELEC-Norm) für PLC gibt, bezieht sich diese auf Spannungen. Durch die erfindungsgemäße Absenkung der Impedanz wird eine höhere eingekoppelte Leistung ermöglicht, wodurch höhere Reichweiten bei gleicher Spannung erzielt werden (die verwendete Stromoptimierung entspricht gleichzeitig einer Leistungsoptimierung, da die verwendete Spannung konstant ist).

Erfindungsgemäß erfolgt die Impedanzanpassung nur in Sendepausen (und nicht während Empfang), um Impedanzmodulation des Sendesignals zu vermeiden. Da die Steuereinrichtung/digitale Recheneinheit/Mikrocontroller/digitaler Signalprozessor/ Digitalschaltung vergleichbarer Funktion ST für die eigentliche Datenübertragung und die Impedanzanpassung zuständig ist, kann sie dies einfach steuern. Die verwendete Stromoptimierung entspricht gleichzeitig einer Leistungsoptimierung, da die verwendete Spannung konstant ist. Die erreichten Reichweiten gehen über etliche Trafostationen und teilweise über mehr als 10 km. Neben der Einsparung der Kosten für diese Sende- / Empfangseinrichtungen können dieselben Nachrichten im Netzwerk durch die nicht mehr notwendigen Wiederholungen deutlich schneller übermittelt werden und das System ist somit in der Lage bezüglich der Echtzeit kritische Funktionen zu realisieren. Diese Anforderung ist wichtig für sicherheitsrelevante Funktionen, die über ein solches System abgewickelt werden sollen. Wenn ein Koppelfilter und ein herkömmliches PLC-Systern bereits vorhanden sind, ist für die Montage der weiteren Komponenten des erfindungsgemäßen Systems keine Abschaltung der Stromleitung erforderlich, da das Einmessen und der Abgleich automatisch erfolgen

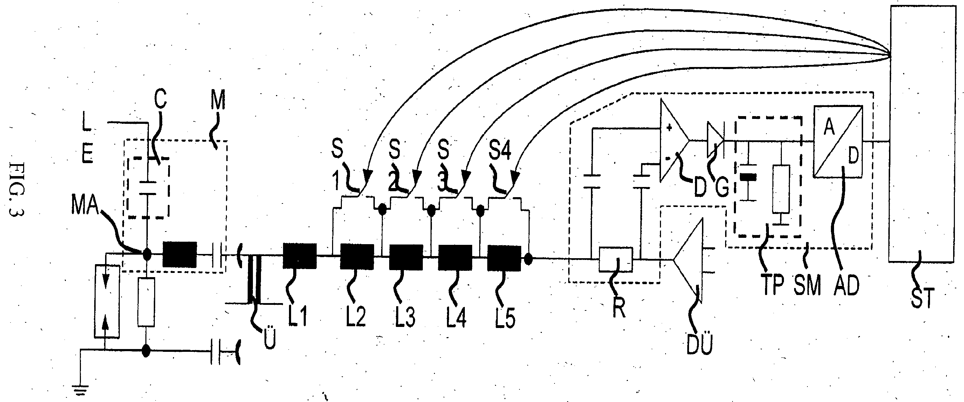

Wie **FIG. 3** für eine dritte Ausführungsform aufzeigt, können die einstellbaren/schaltbaren Induktivitäten L1, ... , Ln vor oder nach einem Übertrager Ü angebracht werden.

Die erfindungsgemäße adaptive, kapazitive Koppelschaltung/Verfahren ermöglicht erstmalig eine Anwendung für PLC, insbesondere Anwendung im MV-/HV-Bereich für die Einspeisung von Signalen bei verschiedenen Frequenzen (z.B. in verschiedenen Bändern des Cenelec Bandes (A-D, 9-150kHz) oder darüber (<500kHz), und zeigt eine neue Art des Abgleichs (Messung und Maximierung des Stroms der Spannungsquelle) auf. In vorteilhafter Weise wird weiterhin ein Selbstschutzfunktion der Schaltung (Kurzschlussfestigkeit) und eine Anpassung an niedrige Netzimpedanz (=zusätzliche Optimierung der Sendeleistung) auch durch Anpassung der Sendespannung ermöglicht und es können handelsübliche feste Induktivitäten mit Toleranz von 10% bis 20% benutzt werden. Weiterhin ist von Vorteil, dass bei einer Abtrennung der Datenübertragungseinrichtung DÜ z. B. zu Servicezwecken nicht die volle Strangspannung des Energieübertragungsnetzes an dem nun freien Ende des Widerstands R anliegt. Die erfindungsgemäße adaptive, kapazitive Koppelschaltung/Verfahren findet überall dort Anwendung, wo hohe Ansprüche an Echtzeitfähigkeit und Sicherheitsanforderungen gestellt werden und ein Höchstmaß an effizienter und sicherer Datenübertragung oder hohen Reichweiten mit wenigen Sende-/Empfangseinheiten erreicht werden soll, beispielsweise im Bergbau, in Mittel- oder Hochspannungsanlagen oder in der industriellen Elektronik, insbesondere der Automatisierungstechnik.

In Weiterentwicklung der Erfindung kann die erfindungsgemäße adaptive, kapazitive Koppelschaltung/Verfahren im Rahmen einer Echtzeitvernetzung von Steuerungen (auch Echtzeitsteuerung mit gemischten Betrieb über Ethernet und Powerline) eingesetzt werden, wo die Synchronisierbarkeit der Teilnehmer (beispielsweise Antriebe, schnelle E/As, Sensoren, Aktoren, Vision-Systeme) untereinander und die Verarbeitung der Daten im Regeltakt der Antriebe Voraussetzung ist; die adaptive, kapazitive Koppelschaltung/Verfahren kann in Verteilerkästen zur Verbrauchsdatenerfassung und Energiesteuerung (beispielsweise Funkauslesung von Verbrauchszähler, Zuschalten einer Last in Abhängigkeit von der momentanen Netzkapazität und der vom Verbraucher angegebenen Leistung) angeordnet oder in einem mit Niederspannungsleitungen in Verbindung stehendes und am Ort eines Summen-Stromzählers angeordnetes Kommunikations-Gateway integriert werden, so dass der jeweilige Netzübergang im kombinierten Funk-/Power-Line System am lokalen Minimum der Netzimpedanz erfolgt; u.a.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Patentanspruch 1 oder 6 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Patentanspruchs 1 oder 6 weggelassen bzw. durch mindestens ein an anderer Stelle der Anmeldung offenbartes Einzelmerkmal ersetzt werden kann.

## Patentansprüche

1. Adaptive, kapazitive Koppelschaltung zur Einspeisung von Signalen einer Spannungsquelle (DÜ) bei verschiedenen Frequenzen in Energiekabel mit mindestens einem Leiter (LE) eines elektrischen Energieverteilnetzes, mit einem Einkoppelfilter (M) und einer mit einem Leiter in Verbindung stehenden, einstellbaren Induktivität (L1, ... , Ln) zur Kompensation einer Kapazität des Leiters, **dadurch gekennzeichnet, dass** zur Einspeisung in ein geschirmtes Energiekabel mit mindestens einem Leiter (LE) und diesen umschließendem Mantel (MA) ein Mantelkoppelfilter (M) als Einkoppelfilter, eine mit dem Mantelkoppelfilter (M) in Verbindung stehende, einstellbare Induktivität (L1, ... , Ln) zur Kompensation der Mantelkoppelkapazität (C) zwischen Leiter (LE) und Mantel (MA), eine mit der einstellbaren Induktivität (L1, ... , Ln) verbundene Steuereinrichtung (ST) und ein mit der Steuereinrichtung (ST) verbundenes Messmodul (SM) zur Messung von Sendestrom oder Sendestrom und Sendespannung vorgesehen ist, und dass die Steuereinrichtung (ST) sowohl die eigentliche Datenübertragung als auch die Impedanzanpassung steuert und die Einkoppelimpedanz in Sendepausen anpasst und dass - falls der Sendestrom nach der Maximierung zu hoch ist - eine Verringerung der Sendeleistung durch Reduktion der Sendespannung erfolgt und dass - falls der Sendestrom nach Maximierung deutlich zu hoch ist - das Senden stoppt und eine Fehlermeldung wegen HF-Kurzschluss am Netz erfolgt, so dass eine Maximierung des Sendestroms der Spannungsquelle (DÜ) durch automatische Optimierung der aus Mantelkoppelkapazität (C) und einstellbarer Induktivität (L1, ... , Ln) gebildeten Einspeiseimpedanz (Z_{E}) der Koppelschaltung nach Maßgabe der Netzimpedanz (Z_{N}) des elektrischen Energieverteilnetzes zur Erzielung einer möglichst niedrigen Einspeiseimpedanz (Z_{E}) und Netzimpedanz (Z_{N}) im jeweiligen Frequenz- und Spannungsbereich erfolgt.

2. Koppelschaltung nach Anspruch 1, **dadurch gekennzeichnet, dass** das Strommessmodul (SM) einen Differenzverstärker (D) zur Messung des Stroms über einen Widerstand (R), einen am Ausgang des Differenzverstärkers (D) angeschlossenen Gleichrichter (G) zur Hüllkurvenauswertung, ein diesem nachgeordnetes Tiefpassfilter (TP) und nachfolgend einen Analog-/Digital-Wandler (AD) aufweist.

3. Koppelschaltung nach Anspruch 1, **dadurch gekennzeichnet, dass** die einstellbare Induktivität (L1, ... , Ln) aus einer Serienschaltung von N Induktivitäten (L1, ... , Ln) besteht.

4. Koppelschaltung nach Anspruch 3, **dadurch gekennzeichnet, dass** die Werte der Induktivitäten (L1, ... , Ln) zueinander binär gestaffelt sind.

5. Koppelschaltung nach Anspruch 1, **dadurch gekennzeichnet, dass** die einstellbare Induktivität (L1, ... , Ln) vor oder nach einem Übertrager (Ü) angeordnet ist.

6. Verfahren zur adaptiven, kapazitiven Kopplung einer Spannungsquelle (DÜ) an ein geschirmtes Energiekabel mit mindestens einem Leiter (LE) und diesen umschließendem Mantel (MA) eines elektrischen Energieverteilnetzes mittels einer Koppelschaltung mit einem Mantelkoppelfilter (M) als Einkoppelfilter, einer schaltbaren Induktivität (L1, ... , Ln), einem Messmodul (SM) zur Messung von Strom oder Strom und Spannung der Spannungsquelle (DÜ) und einer Steuereinrichtung (ST),
bei dem:
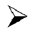 die Einspeisung von Signalen bei verschiedenen Frequenzen erfolgt,
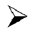 die Kapazität (C) zwischen Leiter (LE) und Mantel (MA) genutzt wird,
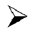 die Steuereinrichtung (ST) sowohl die eigentliche Datenübertragung als auch die Impedanzanpassung steuert und die Einkoppelimpedanz in Sendepausen anpasst und - falls der Sendestrom nach der Maximierung zu hoch ist - eine Verringerung der Sendeleistung durch Reduktion der Sendespannung erfolgt und - falls der Sendestrom nach Maximierung deutlich zu hoch ist - das Senden stoppt und eine Fehlermeldung wegen HF-Kurzschluss am Netz erfolgt, so dass
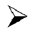 eine Maximierung des Sendestroms der Spannungsquelle (DÜ) durch automatische Optimierung, durch Variation der Induktivität mittels der schaltbaren Induktivität (L1, .. , Ln), der aus Mantelkoppelkapazität (C) und einstellbarer Induktivität (L1, ... , Ln) gebildeten Einspeiseimpedanz (Z_{E}) der Koppelschaltung nach Maßgabe der Netzimpedanz (Z_{N}) des elektrischen Energieverteilnetzes zur Erzielung einer möglichst niedrigen Einspeiseimpedanz (Z_{E}) und Netzimpedanz (Z_{N}) im jeweiligen Frequenzbereich erfolgt.

7. Verfahren nach Anspruch 6, **dadurch gekennzeichnet, dass** die Installation der kapazitiven Koppelschaltung im Betrieb oder bei Abschaltung des jeweiligen Leiters erfolgt.

8. Koppelschaltung nach Anspruch 1, **gekennzeichnet durch** die Anordnung in Verteilerkästen zur Verbrauchsdatenerfassung und Energiesteuerung oder durch die Integration in einem mit Niederspannungsleitungen des geschirmten Energiekabels in Verbindung stehendes und am Ort eines Summen-Stromzählers angeordnetes Kommunikations-Gateway, so dass der jeweilige Netzübergang bei einem kombinierten Funk-/Power-Line System am lokalen Minimum der Netzimpedanz erfolgt.

## Claims

1. An adaptive, capacitive coupling circuit for feeding signals at different frequencies from a voltage source (DÜ) into energy cables, having at least one conductor (LE) of an electrical energy distribution network, a coupling filter (M) and an adjustable inductance (L1, ..., Ln) connected to a conductor for the purpose of compensating a capacitance (C) of said conductor, **characterized in that** for feeding into a shielded energy cable having at least one conductor (LE) and said surrounding sheath (MA) is provided a sheated-loop filter (M) as a coupling-in filter, an adjustable inductance (L1, ..., Ln) be in contact with that sheated-loop filter (M) for the purpose of compensating the sheath coupled capacitance (C) between the conductor (LE) and the sheath (MA), a control device (ST), which is connected to the adjustable inductance (L1, ..., Ln) and a measuring module (SM) connected to the control device (ST) for measuring current or current and voltage, and that said control device (ST) controls both the actual data transmission as well as the impedance adaptation and adapts the coupling impedance in transmission pauses and that - if the transmission current is too high after the maximization - a reduction in the transmission power occurs by reduction of the transmission voltage and - if the transmission current is clearly too high after maximization - the transmission is stopped and a fault message due to HF Short circuit on the mains occurs, such that a maximization of the transmission current of the voltage source (DÜ) is made by means of automatic optimization of the feed impedance (Z_{E}) of the coupling circuit, which comprises said sheath coupled capacitance (C) and said adjustable inductance (L1, ..., Ln), according to the network impedance (Z_{N}) of the power distribution network for achieving a feed impedance (Z_{E}) and a network impedance (Z_{N}) as low as possible in the respective frequency range.

2. A coupling circuit according to Claim 1, **characterized in that** said current measuring module (SM) includes a differential amplifier (D) for measuring the transmission current via a resistor (R), a rectifier (G) connected to the output of the differential amplifier (D) for the envelope curve evaluation, a low-pass filter (TP) downstream thereof, and subsequently an analog/digitalconverter (AD).

3. A coupling circuit according to claim 1, **characterized in that** said adjustable inductance (L1, ..., Ln) consists of a series connection of N inductances (L1, ..., Ln).

4. A coupling circuit according to Claim 3, **characterized in that** the values of the inductances (L1, ..., Ln) are staggered binary with respect to one another.

5. A coupling circuit according to Claim 1, **characterized in that** said adjustable inductance (L1, ..., Ln) is arranged upstream or downstream of a transformer (Ü).

6. A method for the adaptive, capacitive coupling of a voltage source (DÜ) to a shielded energy cable with at least one conductor (LE) and said surrounding sheath (MA) of an electrical energy distribution network, by means of a coupling device having a sheated-loop filter (M) as a coupling-in filter, a switchable inductance (L1, ..., Ln), a measuring module (SM) for measuring current or current and voltage of said voltage source (DÜ), and a control device (ST), whereby:
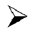 the supply of signals occurs at different frequencies,
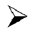 the capacitance (C) between the conductor (LE) and the sheath (MA) is used,
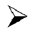 said control device (ST) controls both the actual data transmission as well as the impedance adaptation and adapts the coupling impedance in transmission pauses and that - if the transmission current is too high after the maximization - a reduction in the transmission power occurs by reduction of the transmission voltage and - if the transmission current is clearly too high after maximization - the transmission is stopped and a fault message due to HF Short circuit on the mains occurs , such that
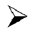 a maximization of the transmission current of said voltage source (DÜ) is made by automatic optimization through the variation of the inductance by means of said switchable inductance (L1, ..., Ln) of the feed impedance (Z_{E}) of the coupling circuit, which comprises a sheath coupled capacitance (C) and said adjustable inductance (L1, ..., Ln), according to the network impedance (Z_{N}) of the power distribution network for achieving a feed impedance (Z_{E}) and a network impedance (Z_{N}) as low as possible in the respective frequency range.

7. A method according to Claim 6, **characterized in that** the installation of the capacitive coupling circuit takes place during operation or when the respective conductor is switched off.

8. A coupling circuit according to Claim 1, **characterized by** arranging it in distribution boxes for consumption data acquisition and energy control or by integration in a communication gateway, which is arranged at the place of a total current meter and associated with low-voltage lines of said shielded energy cable, so that the respective network transition in a combined radio/power line system takes place at the local minimum of the network impedance.

## Revendications

1. Un circuit de couplage capacitif et adaptatif pour fournir des signaux à des fréquences différentes d'une source de tension (DÜ) dans le câble d'alimentation, comportant au moins un conducteur d'un réseau de distribution d'énergie électrique, un filtre de couplage (M) et un inductance variable (L1, ..., Ln) en communication avec un conducteur pour compenser la capacitance (C) du conducteur, **caractérisé en ce que** pour fournir dans un réseau de distribution d'énergie électrique avec au moins un conducteur (LE) et une gaine (MA) enfermer celui, le circuit de couplage comprenant un filtre de couplage d'enveloppe (M) comme filtre couplage, une inductance variable (L1, ..., Ln) connecter avec le filtre de couplage d'enveloppe (M) pour compenser la capacité de couplage d'enveloppe (C) entre le conducteur (LE) et la gaine (MA) des câbles, un dispositif de commande (ST) associée avec l'inductance variable (L1, ..., Ln) et un module de mesure (SM) pour la mesure de courant ou de tension et de courant relié au dispositif de commande (ST), **en ce que** le dispositif de commande (ST) commande à la fois la transmission de données réelle ainsi que l'adaptation d'impédance, et ajuste la impédance de couplage d'enveloppe (Z_{E}) dans les pauses de transmission et en ce que- si la puissance d'émission après la maximisation est trop élevée - une réduction de la puissance de transmission en réduisant la tension de la transmission, et **en ce que** - si la puissance de transmission après la maximisation est trop élevée de façon significative - d'envoyer est arrêtée et un message d'erreur dues un court-circuit RF du réseau d'électricité est générée, de sorte que la maximisation du courant d'émission de la source de tension (DÜ) par optimisation automatique la impédance de couplage d'enveloppe (Z_{E}) du circuit de couplage, qui contiennent la capacité de couplage d'enveloppe (C) et l'inductance variable (L1, ..., Ln), en conformité avec l'impédance du réseau (Z_{N}) du réseau de distribution d'énergie pour obtenir une impédance de couplage d'enveloppe (Z_{E}) et l'impédance du réseau (Z_{N}) du réseau de distribution d'énergie le plus bas possible a lieu dans la gamme de fréquences et de tension respective.

2. Circuit de couplage selon la revendication 1, **caractérisé en ce que** le module de mesure de courant (SM) à un amplificateur différentiel (D) pour la mesure du courant à travers une résistance (R), une redresseur (G) reliée à la sortie de l'amplificateur différentiel (D) pour l'enveloppement, une filtre passe-bas (TP) disposée en aval et par la suite un convertisseur analogique/numérique (AD).

3. Circuit de couplage selon la revendication 1, **caractérisé en ce que** l'inductance commutable (L1, ..., Ln) est d'un circuit série d'inducteurs N (L1, ..., Ln).

4. Circuit de couplage selon la revendication 1, **caractérisé en ce que** que les valeurs des inductances commutable (L1, ..., Ln) sont mutuellement décalés binaire.

5. Circuit de couplage selon la revendication 1, **caractérisé en ce que** l'inductance commutable (L1, ..., Ln) est disposé avant ou après un transformateur (Ü).

6. Un procédé pour couplage capacitif et adaptatif d'une source de tension (DÜ) dans le câble d'alimentation, comportant au moins un conducteur (LE) d'un réseau de distribution d'énergie électrique et une gaine (MA) enfermer celui, avec un circuit de couplage à un filtre de couplage (M) comme filtre de couplage, un inductance commutable (L1, ..., Ln), un module de mesure (SM) pour la mesure de courant ou de tension et de courant relié au dispositif de commande (ST) et un dispositif de commande (ST),
dans lequel:
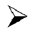 la fourniture de signaux peut être à des fréquences différentes,
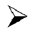 la capacité (C) entre le conducteur (LE) d'un réseau de distribution d'énergie électrique et une gaine (MA) est utilisé,
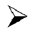 le dispositif de commande (ST) commande à la fois la transmission de données réelle ainsi que l'adaptation d'impédance, et ajuste la impédance de couplage d'enveloppe (Z_{E}) dans les pauses de transmission et en ce que-si la puissance d'émission après la maximisation est trop élevée - une réduction de la puissance de transmission en réduisant la tension de la transmission, et en ce que - si la puissance de transmission après la maximisation est trop élevée de façon significative - d'envoyer est arrêtée et un message d'erreur dues un court-circuit RF du réseau d'électricité est générée, de sorte que
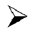 la maximisation du courant d'émission de la source de tension (DÜ) par optimisation automatique la impédance de couplage d'enveloppe (Z_{E}) du circuit de couplage, qui contiennent la capacité de couplage d'enveloppe (C) et l'inductance variable (L1, ..., Ln), en conformité avec l'impédance du réseau (Z_{N}) du réseau de distribution d'énergie pour obtenir une impédance de couplage d'enveloppe (Z_{E}) et l'impédance du réseau (Z_{N}) du réseau de distribution d'énergie le plus bas possible a lieu dans la gamme de fréquences et de tension respective.

7. Procédé selon la revendication 6, **caractérisé en ce que** l'installation du circuit de couplage capacitif, a lieu pendant le fonctionnement ou à l'arrêt du conducteur respectif.

8. Un circuit de couplage capacitif selon la revendication 1, **caractérisé par** le circuit de couplage capacitif est disposé dans des boîtes de distribution pour l'acquisition des données de consommation et de gestion de l'énergie ou est intégrés dans un passerelle de communication, qui est en connexion avec des lignes à basse tension du câble d'alimentation blindé et disposé à l'emplacement des compteurs d'électricité et des sommes, de sorte que l'interfonctionnement de réseau respectif dans le système combiné de ligne RF/puissance a lieu au minimum local du réseau d'impédance.
